# EUROPÄISCHE PATENTANMELDUNG

(11) **EP 3 086 122 A1**
(43) Veröffentlichungstag der Anmeldung: **26.10.2016**
(21) Anmeldenummer: 15164616.3
(22) Anmeldetag: 22.04.2015
(51) Int. Cl.: G01N 35/00, F04B 39/00, F04B 53/00

(54) **ANALYSEGERÄT MIT EINER MECHANISCH ENTKOPPELTEN FLUIDENERGIEMASCHINE**

(71) Anmelder: Siemens Healthcare Diagnostics Products GmbH, 35041 Marburg (DE)
(72) Erfinder: Kalbfell, Heiko, 65232 Taunusstein (DE); Zillikens, Sabine, 65830 Kriftel (DE)

(57) **Zusammenfassung**

Die Erfindung betrifft ein automatisches Analysegerät mit mindestens einer Fluidenergiemaschine (2,3), die auf einem Träger (5) angeordnet ist und über eine schwingungsabsorbierende Aufhängung, z.B. über Federn (6), im Gehäuse (1) des Analysegeräts aufgehängt ist.

## Beschreibung

Die vorliegende Erfindung liegt auf dem Gebiet der automatischen Analysegeräte und betrifft ein automatisches Analysegerät mit mindestens einer Fluidenergiemaschine, die über eine schwingungsabsorbierende Aufhängung im Gehäuse des Analysegeräts aufgehängt ist.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weiterleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Für den Betrieb verschiedener Funktionseinheiten eines Analysegeräts ist der Transport von Flüssigkeiten oder von Luft durch Leitungssysteme erforderlich. Viele Analysegeräte weisen beispielsweise Waschstationen auf, in die die Pipettiernadelspitzen regelmäßig zur Reinigung eingeführt werden. Der Austausch der Waschflüssigkeit erfolgt durch Absaugen aus der Waschstation. Das für den Absaugvorgang notwendige Vakuum wird üblicherweise von einer Vakuumpumpe erzeugt. Viele Analysegeräte weisen überdies Funktionseinheiten auf, die pneumatisch betrieben werden, wie beispielsweise Druckluftzylinder, die wiederum mechanische Funktionen in dem Analysegerät steuern, oder Luftmesser (Air-Knifes). Die für die pneumatisch betriebenen Funktionseinheiten notwendige Druckluft wird üblicherweise von einem Kompressor erzeugt.

Problematisch ist, dass Fluidenergiemaschinen wie Pumpen oder Kompressoren, die mechanische Energie auf ein flüssiges oder gasförmiges Fluid übertragen, mechanische und akustische Schwingungen erzeugen, die sich über das Gehäuse des Analysegeräts auf empfindliche mechanische Funktionseinheiten übertragen und diese in ihrer Funktionsfähigkeit beeinflussen können. Zwar werden die Pumpen und Kompressoren üblicherweise in einer speziellen Kammer des Analysegeräts angebracht, um eine weitestgehende Isolierung von den übrigen Funktionseinheiten herzustellen, dies allein stellt aber keinen hinreichenden Schutz vor Schwingungsübertragungen dar.

Der vorliegenden Erfindung liegt daher die Aufgabe zugrunde, ein automatisches Analysegerät, das mindestens eine Fluidenergiemaschine umfasst, so zu verbessern, dass die Übertragung von von der Fluidenergiemaschine erzeugten mechanischen Schwingungen auf das Gehäuse wirksam vermieden wird.

Die Aufgabe wird erfindungsgemäß dadurch gelöst, dass die Fluidenergiemaschine von dem Gehäuse des Analysegeräts mechanisch entkoppelt wird.

Gegenstand der vorliegenden Erfindung ist demnach ein automatisches Analysegerät mit einem mehrkammrigen Gerätegehäuse, wobei mindestens eine Fluidenergiemaschine in einer Kammer des Gerätegehäuses untergebracht ist und wobei die Fluidenergiemaschine auf einem Träger angeordnet ist, der mittels einer Vorrichtung zur mechanischen Entkopplung in der Kammer des Gerätegehäuses aufgehängt ist.

Dies bewirkt, dass die von der Fluidenergiemaschine erzeugten mechanischen Schwingungen absorbiert und nicht auf das Gehäuse übertragen werden.

In einer Ausführungsform des Analysegeräts umfasst die Vorrichtung zur mechanischen Entkopplung mindestens ein elastisches Rückstellelement, wie beispielsweise eine Feder, vorzugsweise eine Zugfeder, oder ein Gummiband. Der Träger mit der Fluidenergiemaschine kann beispielsweise über eine Ein-Punkt-Aufhängung in der Kammer des Gerätegehäuses aufgehängt sein.

Die Vorrichtung zur mechanischen Entkopplung kann auch zwei, drei, vier oder mehr elastische Rückstellelemente umfassen, so dass der Träger mit der Fluidenergiemaschine an mehreren Punkten in der Kammer des Gerätegehäuses aufgehängt ist. Bevorzugterweise umfasst die Vorrichtung zur mechanischen Entkopplung vier Federn, über die der Träger an vier Punkten in der Kammer des Gerätegehäuses aufgehängt ist.

Alternativ kann die Vorrichtung zur mechanischen Entkopplung mindestens eine in einem Gerätegehäuse-seitigen Lager und in einem Träger-seitigen Lager beweglich gelagerte Trägerstange umfassen. Dazu ist die Trägerstange steif ausgebildet und weist an ihren Enden zur beweglichen Befestigung an das Gehäuse und an den Träger beispielsweise Haken oder Ösen auf, die in entsprechende Haken bzw. Ösen am Gehäuse bzw. am Träger eingreifen.

Die Vorrichtung zur mechanischen Entkopplung kann auch zwei, drei, vier oder mehr solcher beweglich gelagerter Trägerstangen umfassen, so dass der Träger mit der Fluidenergiemaschine an mehreren Punkten in der Kammer des Gerätegehäuses aufgehängt ist.

Alternativ kann die Vorrichtung zur mechanischen Entkopplung auch aus einer mehrgliedrigen, zweidimensional beweglichen Gliederkette bestehen, deren endständige Glieder in entsprechende Haken am Gehäuse und am Träger eingreifen.

Die Vorrichtung zur mechanischen Entkopplung kann auch zwei, drei, vier oder mehr solcher mehrgliedrigen, zweidimensional beweglichen Gliederketten umfassen, so dass der Träger mit der Fluidenergiemaschine an mehreren Punkten in der Kammer des Gerätegehäuses aufgehängt ist.

In einer weiteren Ausführungsform weist der Träger für die Fluidmaschine eine horizontale Basisplatte und mindestens zwei, vorzugsweise vier sich im Wesentlichen senkrecht zur Basisplatte erstreckende Tragarme auf. Die Tragarme sind fest mit der Basisplatte verbunden, bzw. die Basisplatte ist mit den Tragarmen einstückig ausgeformt. Es ist vorzugsweise jeder Tragarm über ein elastisches Rückstellelement oder über eine beweglich gelagerte Trägerstange oder über eine mehrgliedrige, zweidimensional bewegliche Gliederkette mit dem Gerätegehäuse verbunden.

In einer weiteren Ausführungsform des automatischen Analysegeräts ist mindestens eine Fluidenergiemaschine aus der Gruppe Pumpe und Kompressor auf dem Träger angeordnet. Bei anderen erfindungsgemäßen Analysegeräten sind eine Pumpe und ein Kompressor auf dem Träger angeordnet.

In einer weiteren Ausführungsform sind am Einlass und am Auslass einer Fluidenergiemaschine Schlauchleitungen angebracht, die mindestens an einer Stelle innerhalb der Kammer des Gerätegehäuses einen rechtwinklig gebogenen Abschnitt aufweisen. Dies hat den Vorteil, dass bei gleichbleibendem Volumenstrom die Schallentstehung reduziert wird, weil an den rechtwinkligen Richtungssprüngen der Luftschall gebrochen wird. Ein rechtwinklig gebogener Abschnitt in einer flexiblen Schlauchleitung kann durch eine entsprechende Führung des Schlauches beispielsweise mit Hilfe einer formgebenden Führungsschiene hergestellt werden. Alternativ kann eine Schlauchleitung auch ein starres, rechtwinklig gebogenes Verbindungsstück (Fitting) aufweisen.

Zur weiteren Schallisolierung kann die Kammer des Gerätegehäuses, in der die Fluidenergiemaschine untergebracht ist, mit einem schallisolierenden Material, wie beispielsweise porösen Schaumstoffplatten oder Mineralfaserplatten aus z.B. Glas- oder Steinwolle, ausgekleidet sein.

Weiterhin können zur Schallisolierung an Teilen der Fluidenergiemaschine, insbesondere an den Bereichen um den Einlass und den Auslass Schaumstoffstreifen vorgesehen sein.

In einer speziellen Ausführungsform des automatischen Analysegeräts ist der Träger zum Zwecke der Sicherung während eines Transports mittels eines oder mehrerer Stufenbolzen innerhalb der Kammer des Gerätegehäuses mechanisch fixiert. Dazu sind in der Basisplatte des Trägers ein oder mehrere Bohrungen vorgesehen durch die jeweils ein einstufiger Bolzen geführt werden kann. Der Bolzen weist an seinem unteren Ende ein Schraubgewinde auf, das in eine dafür vorgesehene Bohrung im Boden der Gehäusekammer eingedreht werden kann bis die Stufe des Bolzens eine fixierende Kraft auf den Träger ausübt und so eine Bewegung des Trägers während eines Transport vermeidet.

Die Erfindung wird anhand von Zeichnungen näher erläutert.

Gleiche Teile sind in allen Figuren mit denselben Bezugszeichen versehen.

### FIGURENBESCHREIBUNG

- FIG. 1: zeigt eine schematische Vorderansicht einer Kammer 4 eines automatischen Analysegeräts, in der ein Kompressor 3 und eine Pumpe 2 auf einem mechanisch entkoppelten Träger 5 angeordnet sind.
- FIG. 2: zeigt von schräg vorne in einem vergrößerten Ausschnitt aus FIG. 1 die Aufhängung des Trägers 5 über Tragarme 8 und Federn 6.
- FIG. 3: zeigt von schräg unten den Kompressor 3, die Pumpe 2 und Schlauchleitungen 9 mit rechtwinkligen Richtungssprüngen 10.
- FIG. 4: zeigt die Kammer 4 aus FIG. 1, in der der Träger 5 für den Transport mit Stufenbolzen 11 gesichert ist.

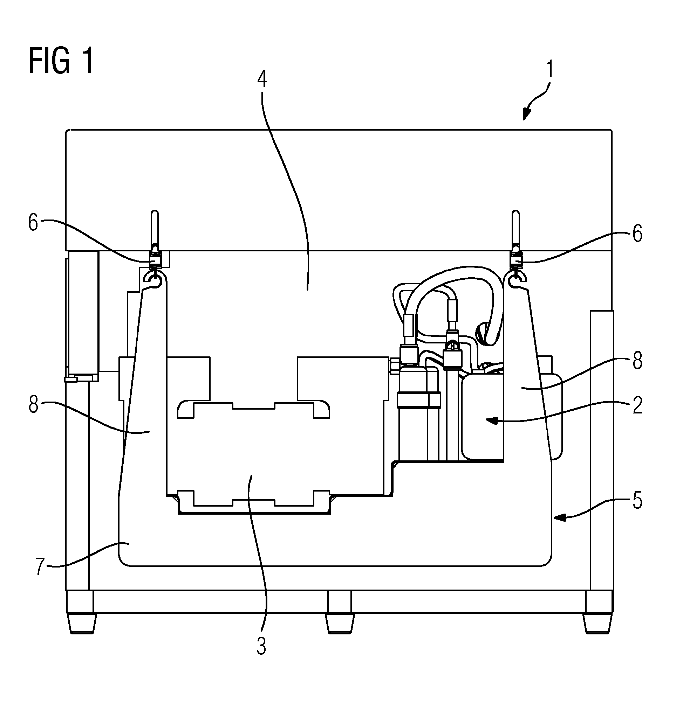

FIG. 1 zeigt eine Kammer 4 eines mehrkammrigen Gerätegehäuses 1 eines nicht näher dargestellten automatischen Analysegeräts für die in vitro-Diagnostik. In der Kammer 4 sind eine Pumpe 2 und ein Kompressor 3 nebeneinander auf einem in der Kammer 4 in Form einer Schaukel frei schwingenden Träger 5 angeordnet. Der Träger 5 umfasst eine rechteckige Basisplatte 7, die an jeder Ecke einen Tragarm 8 aufweist. Jeder Tragarm 8 weist einen endständigen Haken auf, der in eine Zugfeder 6 eingehängt ist. Die Zugfedern 6 sind im Deckenbereich der Kammer 4 mit dem Gerätegehäuse 1 verbunden. Durch diese Art der Aufhängung des Trägers 5 werden der Träger 5 und das Gerätegehäuse 1 mechanisch entkoppelt. Schwingungen, die von der Pumpe 2 und dem Kompressor 3 im Betriebszustand erzeugt werden, werden von den Zugfedern 6 aufgenommen. Dies hat den Vorteil, dass die Übertragung von Schwingungen auf das Gerätegehäuse 1 vermieden wird.

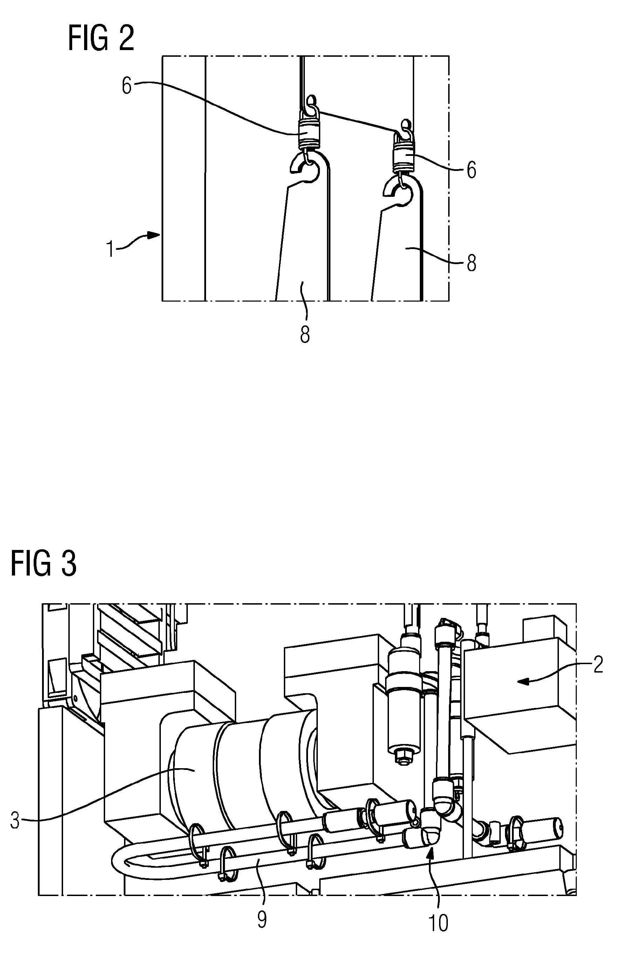

In FIG. 2 ist ein vergrößerter Ausschnitt aus FIG. 1 mit Blick von schräg vorne auf die Aufhängung des Trägers 5 über das Eingreifen der Tragarme 8 in die Zugfedern 6 gezeigt.

FIG. 3 zeigt von schräg unten den Kompressor 3, die Pumpe 2 und Schlauchleitungen 9, die am Einlass und am Auslass von Kompressor 3 und Pumpe 2 angebracht sind. Für eine bessere Darstellbarkeit ist hier der Träger 5 nicht gezeigt. Die Schlauchleitungen 9 weisen rechtwinklig gebogene Abschnitte 10 auf, die in Form von Fittingen, also von festen, vorgefertigen Verbindungstücken ausgebildet sind. Die rechtwinkligen Richtungssprünge der Schlauchleitungen 9 tragen zur Dämpfung des in den Leitungen erzeugten Luftschalls bei und haben damit eine schallreduzierende Wirkung.

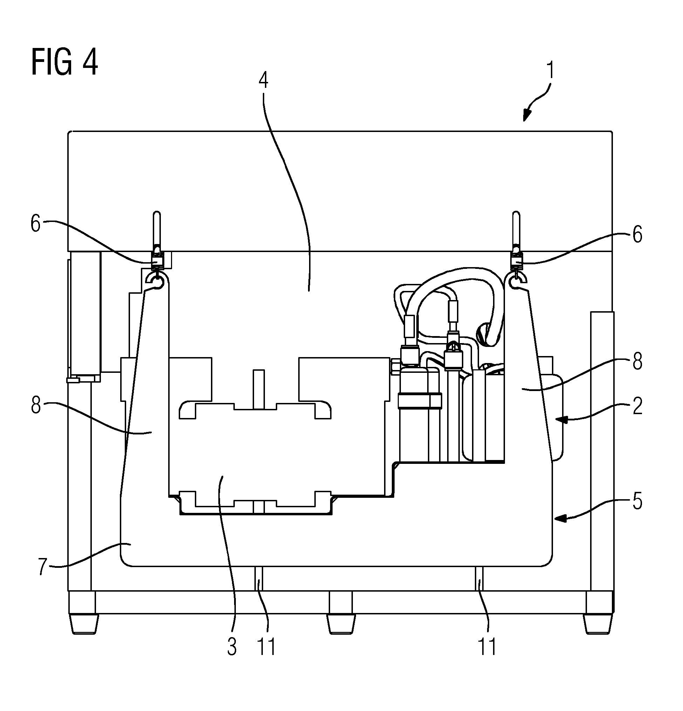

FIG. 4 zeigt die Kammer 4 aus FIG. 1, in der die Pumpe 2 und der Kompressor 3 auf einem frei schwingenden Träger 5 untergebracht sind, allerdings in einem für den Transport vorgesehenen, gesicherten Zustand. Um ein unkontrolliertes Schaukeln des frei schwingenden Trägers 5 zu vermeiden, wurden zwei Stufenbolzen 11 durch Öffnungen in der Basisplatte 7 des Trägers 5 geschoben. Die Stufenbolzen 11 weisen an ihren Enden Schraubgewinde auf, die in dafür vorgesehene Bohrungen im Bodenbereich der Kammer 5 eingedreht werden. Die Öffnungen in der Basisplatte 7 sind so groß, dass sie die Stufenbolzen 11 des Bolzens passieren lassen bis die Stufe auf die Basisplatte 7 stößt. Durch das Festdrehen der Stufenbolzen 11 in den Kammerboden werden die Zugfedern 6 belastet und an der Entlastung gehindert. Dadurch wird eine Fixierung des Trägers 5 erzielt, die vermeidet, dass es während eines Transportes des automatischen Analysegeräts zu unkontrollierten Schaukelbewegungen und dadurch zu Beschädigungen des Trägers 5 bzw. der darauf gelagerten Komponenten kommt.

### BEZUGSZEICHENLISTE

- 1: Gerätegehäuse
- 2: Pumpe
- 3: Kompressor
- 4: Kammer
- 5: Träger
- 6: Zugfeder
- 7: Basisplatte
- 8: Tragarm
- 9: Schlauchleitung
- 10: Rechtwinkliger Schlauchabschnitt
- 11: Stufenbolzen

## Patentansprüche

1. Automatisches Analysegerät mit einem mehrkammrigen Gerätegehäuse (1), wobei mindestens eine Fluidenergiemaschine (2,3) in einer Kammer (4) des Gerätegehäuses (1) untergebracht ist, **dadurch gekennzeichnet, dass** die Fluidenergiemaschine (2, 3) auf einem Träger (5) angeordnet ist, der mittels einer Vorrichtung zur mechanischen Entkopplung in der Kammer (4) des Gerätegehäuses (1) aufgehängt ist.

2. Automatisches Analysegerät nach Anspruch 1, wobei die Vorrichtung zur mechanischen Entkopplung mindestens ein elastisches Rückstellelement umfasst, vorzugsweise eine Feder (6) oder ein Gummiband.

3. Automatisches Analysegerät nach Anspruch 1, wobei die Vorrichtung zur mechanischen Entkopplung mindestens eine in einem Gerätegehäuse-seitigen Lager und in einem Träger-seitigen Lager beweglich gelagerte Trägerstange umfasst.

4. Automatisches Analysegerät nach Anspruch 1, wobei die Vorrichtung zur mechanischen Entkopplung mindestens eine mehrgliedrige, zweidimensional bewegliche Gliederkette umfasst.

5. Automatisches Analysegerät nach einem der Ansprüche 2 bis 4, wobei die Vorrichtung zur mechanischen Entkopplung zwei, drei, vier oder mehr elastische Rückstellelemente oder beweglich gelagerte Trägerstangen oder mehrgliedrige, zweidimensional bewegliche Gliederketten umfasst.

6. Automatisches Analysegerät nach einem der vorhergehenden Ansprüche, wobei der Träger eine horizontale Basisplatte (7) und mindestens zwei, vorzugsweise vier sich im Wesentlichen senkrecht zur Basisplatte (7) erstreckende Tragarme (8) aufweist.

7. Automatisches Analysegerät nach Anspruch 6, wobei jeder Tragarm (8) über ein elastisches Rückstellelement oder über eine beweglich gelagerte Trägerstange oder über eine mehrgliedrige, zweidimensional bewegliche Gliederkette mit dem Gerätegehäuse verbunden ist.

8. Automatisches Analysegerät nach einem der vorhergehenden Ansprüche, wobei mindestens eine Fluidenergiemaschine aus der Gruppe Pumpe (2) und Kompressor (3) auf dem Träger angeordnet ist.

9. Automatisches Analysegerät nach Anspruch 9, wobei eine Pumpe (2) und ein Kompressor (3) auf dem Träger (5) angeordnet sind.

10. Automatisches Analysegerät nach einem der vorhergehenden Ansprüche, wobei am Einlass und am Auslass der Fluidenergiemaschine (2, 3) Schlauchleitungen (9) angebracht sind, die mindestens an einer Stelle innerhalb der Kammer (4) des Gerätegehäuses (1) einen rechtwinklig gebogenen Abschnitt (10) aufweisen.

11. Automatisches Analysegerät nach einem der vorhergehenden Ansprüche, wobei die Kammer (4) des Gerätegehäuses (1) mit einem schallisolierenden Material ausgekleidet ist.

12. Automatisches Analysegerät nach einem der vorhergehenden Ansprüche, wobei der Träger (5) zum Zwecke der Sicherung während eines Transports mittels eines oder mehrerer Stufenbolzen (11) innerhalb der Kammer (4) des Gerätegehäuses (1) mechanisch fixiert ist.
